# EUROPEAN PATENT APPLICATION

(11) **EP 4 703 159 A1**
(43) Date of publication of application: **04.03.2026**
(21) Application number: 25199240.0
(22) Date of filing: 01.09.2025
(51) Int. Cl.: B60D 1/06, B60R 9/06

(54) **CARRYING PART OF A CARRIER FOR ATTACHMENT TO THE TOWING DEVICE OF A VEHICLE**

(30) Priority: 30.08.2024 CZ 20240336
(71) Applicant: Cersum s.r.o., 46001 Liberec, Liberec XI-Ruzodol I (CZ)
(72) Inventor: Bohm, Tomas, 25084 Sibrina, Stupice (CZ); Kuzel, Petr, 46001 Liberec (CZ); Tuma, Jiri, 46001 Liberec (CZ)
(74) Representative: Tomickova, Dana

(57) **Abstract**

The object of the invention is a carrying part of a carrier for attachment to a towing device of a vehicle comprising a base (1) and two clamping elements (2,3) for clamping a spherical head (15) of the towing device. The first clamping element (2) is movably mounted in the base (1) and the second clamping element (3) is rotationally mounted in the base (1). Wherein the first clamping element (2) is mounted in the base (1) rotationally and slidably and wherein the carrying part of the carrier further comprises an arm (4) rotationally connected to the base (1), an elastic member (5), an eccentric (6) and/or a cam (6'), and a mechanical connection for linking the movement of the eccentric (6) and/or cam (6') to the movement of the arm (4), wherein the first clamping element (2) is connected to the eccentric (6) and/or cam (6') via the elastic member (5) such that the movement of the eccentric (6) and/or cam (6') exerts a force on the elastic member (5) to move the first clamping element (2) and to create an elastic deformation of the elastic member (5).

## Description

### Technical Field

The invention relates to a carrying part of carriers for attachment to a towing device of a motor vehicle, wherein in particular, it relates to platforms to which the remaining parts of the carrier used for carrying and attaching transported objects are further connected.

### Background of the Invention

In the current state of the art, carriers for attachment to a spherical head of a towing device are known. Especially bicycle racks, micromobility means, storage boxes, and other accessories. The main technical problem encountered by solutions known from the state of the art is the optimization of three main parameters, sufficient clamping force on the spherical head of the towing device, easy handling of the carrying part or the whole carrier, and easy locking of the rack on the spherical head.

The patent file CN111152728 A describes a carrier solution where two clamping jaws clamping a spherical head of a towing device are used. These clamping jaws are rotationally connected to a base and connected by means of lever mechanism arms to a control lever. Simultaneously, one of the rotational links of the jaws is slidable, where the pin, which is part of the rotational link, is adjusted by an adjusting screw from one side. This solution shows a set of disadvantages. Primarily the need to manipulate the adjusting screw to set the clearances and thus the clamping force of the jaws. Apart from the non-intuitive necessity of using a working tool, it is necessary to re-set and re-define the clearances in case of attachment on different spherical heads. In addition, the control lever is difficult to access and in itself increases the height of the carrying part, which may result in a collision when opening the door of the luggage compartment.

The patent file PL2814696 T3 discloses a frame of a bicycle rack that is attachable to the ball of a towing device in the direction of travel of the vehicle. The frame comprises two rotationally connected components, wherein the bicycle rack is positioned on the second (movable) component. The first (fixed) component comprises two rotationally movable clamping elements for clamping the ball and an elastic member for pressing the jaws towards each other, wherein the pivot pins of both jaws are also slidable away from and towards each other. The rotational movement of the second platform component, on which profiles for mounting the transported bicycles are positioned, exerts a force on the first clamping element, where both clamping elements are displaced by this action of force, wherein this action is transmitted by a rotationally attached ring. This solution has a user disadvantage in that the carrier cannot be attached perpendicular to the longitudinal axis of the vehicle in a plane parallel to the road. Simultaneously, it is structurally complicated to ensure manufacturing accuracy for the tolerances of the grooves in which the clamping jaws are guided. The very transfer of the force from the movable part to the first jaw forces the second component to be positioned in close proximity to the point of attachment of the ball of the towing device. Also, the transfer of forces via the rotationally mounted ring is disadvantageous because, in the position where the ball is clamped, the locking is unstable and must be supplemented by a separate locking mechanism that carries almost all the force exerted by the external action that would lead to the opening of the clamping mechanism.

### Summary of the Invention

The above shortcomings are eliminated to a certain extent by a carrying part of a carrier for attachment to a towing device of a vehicle comprising a base and two clamping elements for clamping a spherical head of the towing device. The first clamping element is movably mounted in a base and the second clamping element is rotationally mounted in the base. The first clamping element is mounted in the base at least rotationally and slidably, wherein the carrying part of the carrier further comprises an arm rotationally connected to the base, an elastic member, an eccentric and/or a cam, and a mechanical connection for linking the movement of the eccentric and/or cam to the movement of the arm, wherein the first clamping element is connected to the eccentric and/or cam via the elastic member such that the movement of the eccentric and/or cam exerts a force on the elastic member to move the first clamping element and to create an elastic deformation of the elastic member. This solution provides a way to position the carrying part of the carrier to the towing device of the vehicle while maintaining a sufficient clamping force of the spherical head. Simultaneously, this solution allows to ensure a symmetrical length of the carrying part of the carrier for attachment to the towing device of the vehicle on both sides from the spherical head.

The movable mounting of the first clamping element is implemented by a first pin that is mounted in the elastic member, and the rotational mounting of the second clamping element is implemented by a second pin that is mounted in an opening for the second pin in the base. The use of pins provides a suitable transfer of forces and simultaneously allows for an easy and cost-effective structure, wherein it is further possible to ensure rotation of the clamping elements around the axis of the pins. This solution also eliminates a groove in the base which could allow dirt to penetrate into the internal space.

Further, it is possible to take advantage of the fact that the elastic member is slidably mounted in the base. In the fully open position when fitted on the spherical head, the sliding of the elastic member allows to increase the space for the passage of the spherical head and to facilitate assembly and disassembly of the carrying part of the carrier for attachment to the towing device of the vehicle.

Alternatively, the movable mounting of the first clamping element is implemented by the first pin that is mounted in the groove formed in the base, and the rotational mounting of the second clamping element is implemented by the second pin that is mounted in the opening for the second pin in the base. The use of pins provides a suitable transfer of forces and simultaneously allows for an easy and cost-effective structure, wherein it is further possible to ensure rotation of the clamping elements around the axis of the pins.

Further, it is possible to take advantage of the fact that the axis of rotation of the arm is identical to the axis of rotation of the second clamping element. This ensures a favorable transfer of forces.

Preferably, the rotational connection of the arm is implemented by connecting the arm to the second pin. This ensures a favorable transfer of forces and simultaneously reduces the number of components required to implement such a connection.

Further it is preferably possible to take advantage of the fact that both the axis of rotation of the rotational mounting of the first clamping element and the axis of rotation of the rotational mounting of the second clamping element, when the carrying part of the carrier is fitted on the spherical head of the towing device, are in a position lower in the vertical direction than a plane perpendicular to the vertical direction, in which the spherical head has a cross-section with the largest external circumference or lies in that plane. Thereby, a further increase in securing the clamping connection is achieved without the need for additional securing elements, it is especially preferred if both the axis of rotation of the rotational mounting of the first clamping element and the axis of rotation of the rotational mounting of the second clamping element, when the carrying part of the carrier is fitted on the spherical head of the towing device, are in a position lower in the vertical direction than the plane perpendicular to the vertical direction, in which the spherical head has a cross-section with the largest external circumference, wherein this structure provides greater resistance to forces acting in the direction of the opening of the clamping.

Preferably, the elastic member comprises an upper part and a lower part that are formed together as one piece and there is at least one internal opening therebetween, wherein on a part of the surface of the internal opening, the elastic member comprises a region for contact with the eccentric and/or cam, wherein the elastic member is provided with a receiving recess or opening for receiving the first pin spaced apart from the region for contact with the eccentric and/or cam. The closed profile of the elastic member has, among other things, an advantage of a suitable force exertion, and from a safety perspective, the force exertion continues even if one of the parts fails.

Preferably, it is useful that the eccentric and/or cam is mounted on the second pin. This ensures a favorable transfer of forces and simultaneously reduces the number of components required to implement such a connection. Alternatively, the eccentric and/or cam may be positioned on the first pin.

Preferably, it is useful that the arm is provided with a hinge that is connected by a shape connection to the second pin. The hinge, which is preferably on the external side of the base, allows to save space inside the arm and the base for other elements of the clamping mechanism and thus reduce the external dimensions of the arm and the base.

Further, it is possible to take advantage of the fact that each clamping element comprises a through opening through which a corresponding pin passes, wherein the base comprises a symmetrically implemented opening for the second pin in the base on two opposite sides for mounting the second pin and a symmetrically implemented groove on two opposite sides for mounting the first pin, wherein the carrying part of the carrier comprises two elastic members and two eccentrics and/or cams symmetrically mounted according to the preceding claims. Doubling of the elastic members and the eccentric and/or cam improves the distribution of forces exerted on the clamping elements, wherein this distribution of forces is more symmetrical.

Alternatively, it is possible to take advantage of the fact that each clamping element comprises two corresponding co-axial protruding pins, wherein the base comprises the symmetrically implemented opening for the second pin in the base on two opposite sides for mounting the second pins and the symmetrically implemented groove on two opposite sides for mounting the first pins, wherein the carrying part of the carrier comprises two elastic members and two eccentrics and/or cams, each symmetrically mounted on one of the second pins according to the preceding claims. Doubling of the elastic members and the eccentric and/or cam improves the distribution of forces exerted on the clamping elements, wherein this distribution of forces is more symmetrical.

Alternatively, it is possible to take advantage of the fact that each clamping element comprises the through opening through which the corresponding pin passes, wherein the base comprises the symmetrically implemented opening for the second pin in the base on two opposite sides for mounting the second pin and the carrying part of the carrier comprises two elastic members which are symmetrically positioned, wherein the first pin is mounted in both the first and the second elastic members, wherein the carrying part of the carrier comprises two eccentrics and/or cams symmetrically mounted according to the preceding claims Doubling of the elastic members and the eccentric and/or cam improves the distribution of forces exerted on the clamping elements, wherein this distribution of forces is more symmetrical.

Alternatively, it is possible to take advantage of the fact that each clamping element comprises two corresponding co-axial protruding pins, wherein the base comprises the symmetrically implemented opening for the second pin in the base on two opposite sides for mounting the second pins and the carrying part of the carrier comprises two elastic members that are symmetrically positioned, wherein the first of the first pins is mounted in the first elastic member and the second of the first pins is mounted in the second elastic member, wherein the carrying part of the carrier comprises two eccentrics and/or cams, each symmetrically mounted on one of the second pins according to the preceding claims. Doubling of the elastic members and the eccentric and/or cam improves the distribution of forces exerted on the clamping elements, wherein this distribution of forces is more symmetrical.

Preferably, it is useful that the base and the arm are beams of a hollow closed profile, wherein the base and the arm have an identical external dimension in the plane perpendicular to their longitudinal axis, wherein in the closed position, when the clamping elements are clamped, the longitudinal axes of the arm and the base are identical. This achieves a uniform external shape of the carrying part of the carrier for connection to the towing device of the vehicle, which is advantageous especially when using a modular system where the carrying parts of the carrier are connected to the base and the movable arm; last but not least, this solution also reduces the manufacturing costs of the present invention.

Alternatively, the longitudinal axes of the arm and the base may be parallel in the clamped position. The arm is thus preferably offset from the base in the direction of the axis of rotation of the first pin - the arm is thus positioned next to the base in the direction of the axis of rotation of the first pin, and thus it is not in the extension of the base. This positioning of the arm allows for a better load transmission of the fastening mechanism and facilitates control (clamping and releasing of the clamping elements).

The arm may be removable, allowing for easier handling of the carrier, for example, during its storage, transfer, etc.

Preferably, it is possible to take advantage of the fact that the elastic member is mounted perpendicular to the first pin, wherein the elastic member is in contact with the internal surface of the base at least at two points, wherein these two points lie on a line having exactly one intersection with the cross-section of the first pin. This achieves the guidance of displacement of the first pin in a trajectory parallel to the axis of the base, which brings an advantage during movement and transfer of the forces, and also eliminates unwanted vibrations that would arise without this embodiment and would reduce user comfort due to disturbing sounds.

The adjoining ends of the base and the arm are complementary in shape. This achieves the transfer of forces exerted from the possibly connected carrier on the base and the movable arm between these components, either directly by the complementary adjoining ends and/or by reinforcements that transmit these forces, wherein there is a clearance between the complementary adjoining ends of the arm and the base.

Preferably, it is useful that in the closed position, when the clamping elements are clamped, the eccentric and/or cam abut against the elastic member in the region for contact with the eccentric and/or cam, and in the released position, when the clamping elements are not fully clamped, the eccentric and/or cam abut against the elastic member in the region for contact with the eccentric and/or cam, wherein the eccentric and/or cam are in contact with the elastic member in the region for contact with the eccentric and/or cam the entire time between the transition from the closed position to the released position and vice versa. This solution achieves rolling of the eccentric and/or cam on the elastic member in the region for contact with the eccentric and/or cam, which results in a smoother increase in the forces, reduces the control force that must be exerted when attaching the carrying part of the carrier for connection to the towing device of the vehicle, and ensures a continuous increase in the tension of the elastic member.

Preferably, when changing the arm from/to the clamped position of the clamping elements, the eccentric mainly rolls on the elastic member. The SRR (slide-to-roll ratio) parameter is thus, for example, less than 0.5. The more rolling and the less friction there is between the eccentric and the elastic member, the better the transfer of the load, the slower the wear of these elements, etc.

This is achieved, for example, in a preferred embodiment, in which the cam is carried by one of the first pin and the second pin, and the elastic member is in contact with the cam and the pin that does not carry the cam. The elastic member does not completely surround the cam, for example, it only has a line contact with it. This allows the elastic member to slide relative to the cam as the cam rotates, thus allowing for at least partial rolling. The lever is coupled to the cam or the pin that carries the cam such that movement of the lever causes deformation of the elastic member and allows clamping or unclamping of the clamping elements.

### Description of Drawings

A summary of the invention is further clarified using exemplary embodiments thereof, which are described with reference to the accompanying drawings, in which:
fig. 1 schematically shows the carrying part of the carrier for attachment to the towing device of the vehicle according to the first exemplary embodiment of this invention in an exploded view,
fig. 2 shows a section of the assembled carrying part of the carrier for attachment to the towing device of the vehicle from fig. 1,
fig. 3 shows the eccentric according to the fifth and sixth exemplary embodiment,
fig. 4 shows the elastic member according to the first exemplary embodiment,
fig. 5 shows the elastic member according to the fourth exemplary embodiment,

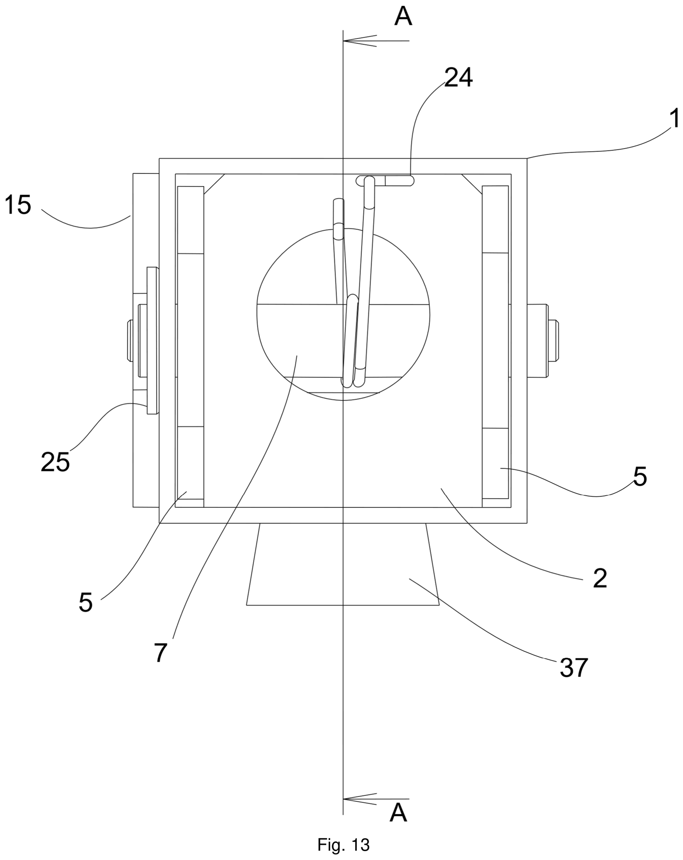

fig. 6 shows a section of the carrying part of the carrier according to the first exemplary embodiment in the A-A plane with the clamped towing device according to fig. 13, wherein the reinforcements and the safety locking mechanism are not depicted in the drawing,
fig. 7 shows the cam and the elastic member according to the third exemplary embodiment,
fig. 8 shows the elastic member with the eccentric according to the sixth exemplary embodiment,
fig. 9 shows the elastic member according to the sixth exemplary embodiment,
fig. 10 shows the cam according to the fourth exemplary embodiment,
fig. 11 shows the cam according to the first exemplary embodiment,
fig. 12 shows the cam according to the second exemplary embodiment,
fig. 13 shows a side view of the carrying part of the carrier with the clamped towing device according to the first exemplary embodiment,
fig. 14 shows the assembly of the second pin according to the first exemplary embodiment,
fig. 15 shows the core of the second pin according to the first exemplary embodiment,
fig. 16 shows elements mounted on the core of the second pin according to the first exemplary embodiment,
fig. 17 shows a section of the carrying part of the carrier in the B-B plane in the open position according to the first exemplary embodiment with a part of the towing device shown,
fig. 18 shows the carrying part of the carrier from the section of fig. 17 in a side view with a part of the towing device,
fig. 19 shows the carrying part of the carrier in a top view according to the seventh exemplary embodiment,
fig. 20 shows the carrying part of the carrier in a side view according to the seventh exemplary embodiment,
fig. 21 shows a section of the carrying part of the carrier according to the seventh exemplary embodiment in the C-C plane,
fig. 22 shows a section of the carrying part of the carrier according to the seventh exemplary embodiment in the C-C plane,
fig. 23 shows the elastic member according to the seventh exemplary embodiment,
fig. 24 shows various embodiments of elastic members with the upper and lower part indicated,
fig. 25 depicts the clamping elements according to the ninth and eighth exemplary embodiment,
fig. 26 schematically shows the carrying part of the carrier for attachment to the towing device of the vehicle according to the tenth exemplary embodiment of this invention, wherein the base and the arm are made transparent and indicated by a dashed line,
fig. 27 depicts the elastic member according to the tenth exemplary embodiment,
fig. 28 is a top view of the base with the arm according to the eleventh exemplary embodiment,
fig. 29 is a top view of the clamping elements clamping the towing device and which are connected to the arm, according to the eleventh exemplary embodiment,
fig. 30 is an isometric view of the clamping elements clamping the towing device and which are connected to the arm,
fig. 31 is an isometric view of the second pin according to the eleventh exemplary embodiment,
fig. 32 is a side view of the second pin according to the eleventh exemplary embodiment, with the section A-A indicated,
fig. 33 is a detail of the second pin in the section A-A.

### Exemplary Embodiments of the Invention

The invention will be further clarified using exemplary embodiments with reference to the respective drawings. The object of the invention is a carrying part of a carrier for attachment to a towing device of a vehicle with a spherical head 15. The carrying part of the carrier is the part of the carrier that is attached to the towing device and further carries the structure of the carrier. The remaining structure of the carrier is connected to the carrying part, wherein this connection is any of the following: welded connection, being formed as one piece with the base 1, screw connection, rivet connection, shape connection and a combination of these connections. The invention is suitable in particular for carriers where the remaining part of the carrier is connected to the carrying part of the carrier removably as a modular component such that the installation procedure of the attachment to the towing device comprises the steps of installation of the carrying part of the carrier to the towing device and subsequent connection of the remaining part of the carrier to the carrying part of the carrier. The carrier as such is used for mounting and attachment of cargo to the rear of a car, wherein such cargo may be bicycles, other means of micromobility such as scooters, skis, unicycles, etc., storage boxes, transport boxes for vertebrates, grills, etc.

The carrying part of the carrier comprises clamping elements 2,3, which are designed for clamping the spherical head 15 of the towing device.

### First exemplary embodiment

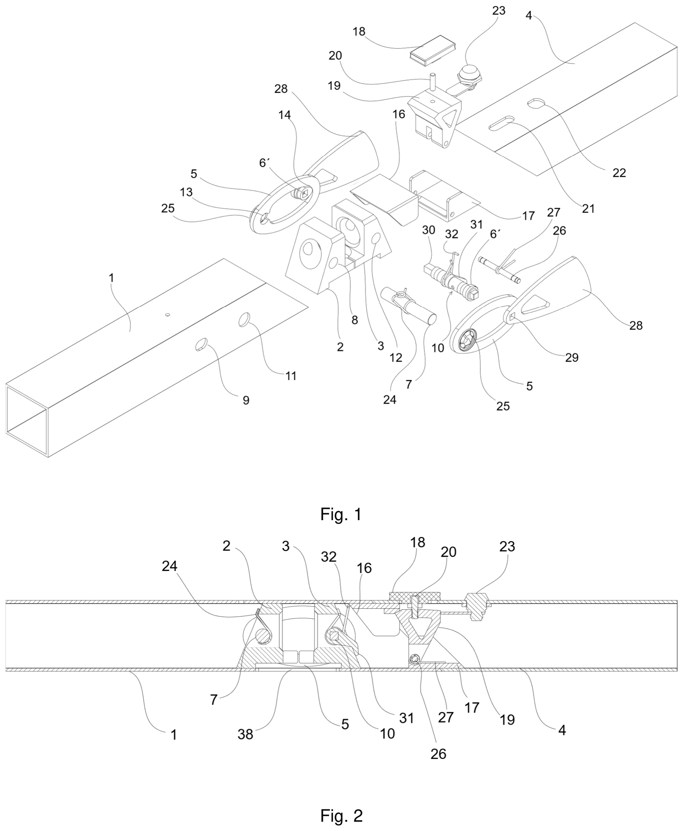

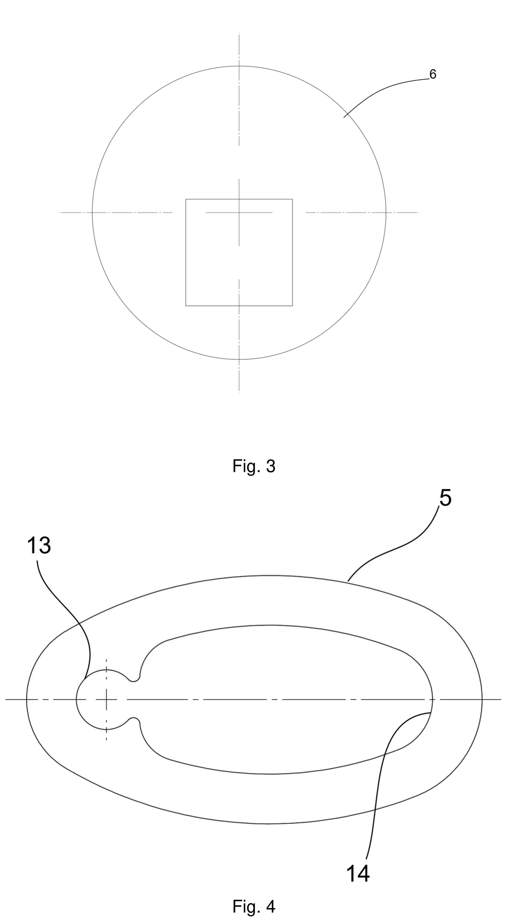

The first exemplary embodiment is a solution of the carrier part of a carrier shown in fig. 1 in an exploded view, in fig. 2 in a section, wherein the details of the components of this embodiment are depicted in fig. 4, fig. 11, fig. 14, fig. 15, and fig. 16. The carrying part of the carrier comprises a base 1, in which the clamping elements 2,3 are mounted and an arm 4 is rotationally connected to the base 1. The base 1 and the arm 4 are beams of a hollow closed profile, wherein they have the same external dimension in a plane perpendicular to their longitudinal axis. In the closed position, i.e. in the position where the spherical head 15 of the towing device is clamped by the clamping elements 2,3, the longitudinal axes of the arm 4 and the base 1 are identical. The closed profiles depicted in fig. 1 and fig. 2 are of n-gonal cross-section, wherein in this embodiment, this n-gon is a tetragonal cross-section, and more particularly a square cross-section.

The base 1 and arm 4 are complementary in shape at their adjacent ends, wherein in this exemplary embodiment, they are beveled such that they abut against each other in the closed position, or in the case of the use of reinforcements 16,17 such that the base 1 and the arm 4 do not collide with respect to one another. In this exemplary embodiment, the adjacent ends of the base 1 and the arm 4 are provided with the reinforcements 16,17. The base 1 is provided with an upper reinforcement 16, which is attached thereto and extends past it outwardly into the space, which in the closed position is the internal space of the arm 4. The upper reinforcement 16 comprises at least two parallel walls and one wall perpendicular thereto that connects them. The parallel walls of the upper reinforcement 16 abut against the internal side walls of the base 1 and the connecting wall of the upper reinforcement 16 abuts against the internal upper wall of the base 1. The parts of the upper reinforcement 16 protruding from the base 1 in the closed position abut against the internal walls of the arm 4.

The arm 4 is provided with a bottom reinforcement 17, which is attached thereto and extends past it outward into the space, which in the closed position is the internal space of the base 1. The bottom reinforcement 17 comprises at least two parallel walls and one wall perpendicular thereto that connects them. The parallel walls of the bottom reinforcement 17 abut against the internal side walls of the arm 4 and the connecting wall of the bottom reinforcement 17 abuts against the internal bottom wall of the arm 4. The parts of the bottom reinforcement 17 protruding from the arm 4 in the closed position abut against the internal walls of the base 1.

The reinforcements 16,17 form a seating surface on which the arm 4 and the base 1 abut each other in the closed position.

The use of the triple-walled reinforcement 16,17 is advantageous in this exemplary embodiment because of the additional securing of the position in multiple directions. However, a single-walled reinforcement may also be used, which comprises only the wall that, in the embodiment of the reinforcements 16,17 above, performs the function of the connecting wall. When other cross-section of the arm 4 and the base 1 than the square one is used, it is also possible to use reinforcements of other shapes, wherein it is always the case that at least a part of the upper reinforcement abuts against the internal surface of the base 1 and protrudes therefrom above the axis of rotation of the arm 4, preferably at and/or near the highest point of the internal space, which is defined by the internal space of the closed profile of the base 1, and at least a part of the bottom reinforcement abuts against the internal surface of the arm 4 and protrudes therefrom below the axis of rotation of the arm 4, preferably at and/or near the lowest point of the internal space that is defined by the internal space of the closed profile of the arm 4. In such embodiments, the reinforcements may have a complementary shape of the cross-section of the base 1 and the arm 4, for example when using a circular cross-section, they may have the shape of a part of the shell of a hollow cylinder, in the case of any cross-section, rods or cuboids may also be used as the reinforcements, wherein a plurality of rods or cuboids may be used for both the upper and bottom reinforcement analogously to the exemplary embodiment described above.

In this exemplary embodiment, the arm 4 is provided with two symmetrically mounted hinges 28 which are firmly connected to the arm 4 from the outside and are connected by rotational connection to the base 1.

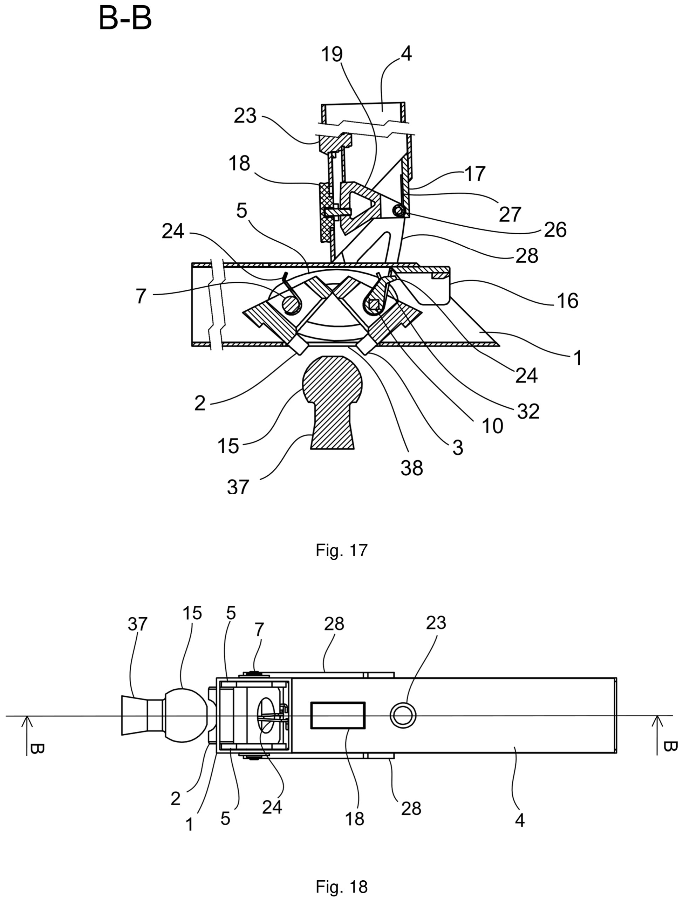

The base 1 is provided with a groove 9 for the first pin 7, on which the first clamping element 2 is mounted, and an opening 11 for the second pin 10, on which the second clamping element 3 is mounted. In this exemplary embodiment, the base 1 is provided with two symmetrical and symmetrically positioned grooves 9 for the first pin 7 and, likewise, two symmetrical and symmetrically positioned openings 11 for the second pin 10. The grooves 9 for the first pin 7 and the openings 11 for the second pin 10 are positioned coaxially with the axis of rotation of the arm 4, in this exemplary embodiment in the side walls of the base 1. In this exemplary embodiment, the openings 11 for the second pin 10 have the shape of a circle and the grooves 9 for the first pin 7 have the shape of two semicircles of the same radius, which are connected by a rectangle having one of the walls equal to twice the radius of the semicircles (so-called stadium). The base 1 is further provided with an opening 38 for the passage of the spherical head 15. In this exemplary embodiment, the opening 38 for the passage of the spherical head 15 is positioned in the bottom portion of the base 1, in the space between the first pin 7 and the second pin 10. In this particular exemplary embodiment, the opening 38 for the passage of the spherical head 15 is positioned in the bottom wall of the base 1. Wherein the opening 38 for the passage of the spherical head 15 is of any shape and the cross-section thereof comprises a surface at least equal to or greater than the largest of the cross-sections of the spherical head 15 in a section in the horizontal plane, which is typically between 51 mm and 48 mm, the opening 38 for the passage of the spherical head 15 is in this exemplary embodiment implemented such that its width is equal to or greater than the width of the clamping elements 2,3 and limits their maximum rotation in one of the directions of rotation, therefore, as indicated in principle in fig. 17, it has in this embodiment, for example, a rectangular shape. The arm 4 is provided with a groove 21 for a safety button 18 and an opening 22 for a lock element 23. In this exemplary embodiment, the groove 21 for the safety button 18 and the opening 22 for the lock element 23 are positioned in the upper part of the arm 4.

In this exemplary embodiment, the clamping elements 2,3 for clamping the spherical head 15 are symmetrical pieces. Each clamping element 2,3 comprises a through opening 8,12 in which the pin 7,10 is mounted. Each clamping element 2,3 is provided with a contact surface for contact with the spherical head 15, wherein in this exemplary embodiment, the contact surface is a globular strip that is a globular strip from a hemisphere.

The clamping elements 2,3 comprise on their bottom part, on the side where the contact surface for contact with the spherical head 15 is, a protrusion that is provided with a recess in the shape of a part of a cylinder, which is a part of the cylinder formed by cutting off from the cylinder by a plane parallel to the axis of the cylinder, wherein it is that part of the cylinder that has the same or less volume than the remaining part of the cylinder. The said protrusions are intended to embrace the shank 37 of the towing device.

The clamping elements 2,3 are also provided with an opening extending perpendicular to the through opening 8,12 for the pin 7,10, which extends through the clamping element 2,3. This opening is used both to reduce weight, and to insert a part of the spherical head 15, and for possible passage of a spring 24,32 of the pin 7,10.

The first clamping element 2 is movably mounted in the base 1 and the second clamping element 3 is rotationally mounted in the base 1. The movable and rotational mounting of the first clamping element 2 is a rotational and slidable mounting. In this exemplary embodiment, the movable mounting of the first clamping element 2 is implemented by mounting the first clamping element 2 on the first pin 7, which passes through the first clamping element 2 through the through opening 8 of the first clamping element 2 and is mounted in the grooves 9 for the first pin 7. In this exemplary embodiment, the mounting of the second clamping element 3 is implemented by mounting the second clamping element 3 on the second pin 10, which passes through the second clamping element 3 through the through opening 12 of the second clamping element 3 and is mounted in the openings 11 for the second pin 10. The first clamping element 2 and the second clamping element 3 are spaced apart, wherein they are oriented such that the side of the first clamping element 2 on which the surface for contact with the spherical head 15 is located is closer to the side of the second clamping element 3 on which the surface for contact with the spherical head 15 is located than the side of the second clamping element 3 opposite the side of the second clamping element 3 on which the surface for contact with the spherical head 15 is located and simultaneously such that the side of the second clamping element 3 on which the surface for contact with the spherical head 15 is located is closer to the side of the first clamping element 2 on which the surface for contact with the spherical head 15 is located than to the side of the first clamping element 2 opposite the side of the first clamping element 2 on which the surface for contact with the spherical head 15 is located.

In this exemplary embodiment, the first pin 7 has a cylindrical shape and the spring 24 of the first pin 7 is mounted thereon. In this exemplary embodiment, the first pin 7 has a cylindrical shape. A safety washer 25, preferably a starlock type safety washer 25, is fitted on the first pin 7 behind the elastic members 5 on each side.

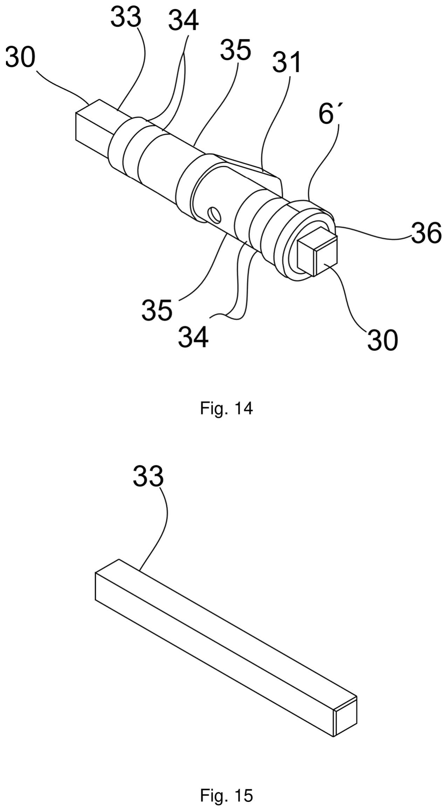

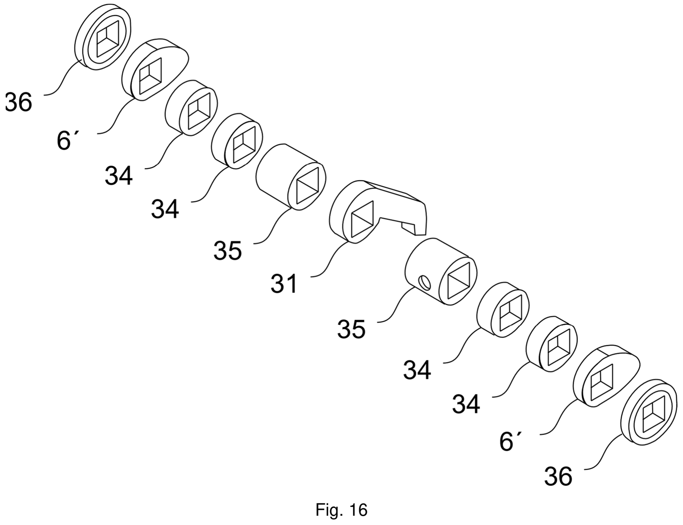

The second pin 10 is depicted in fig. 14. In this exemplary embodiment, the second pin 10 comprises a core 33 of the second pin 10 having an n-gonal cross-section in a plane perpendicular to its longitudinal axis, which is depicted in fig. 15, wherein in this exemplary embodiment, the core 33 of the second pin 10 has a rectangular cross-section, while in this particular exemplary embodiment the cross-section is square. Components that are mounted on the core 33 of the second pin 10 are depicted in fig. 16, in an exploded view, wherein they all comprise an opening for receiving the core 33 of the second pin 10. The components are mounted on the core 33 of the second pin 10, wherein they are secured against the movement in the direction of the longitudinal axis of the core 33 of the second pin 10 by the walls of the base 1, wherein this securing may be further supplemented by a hole in the core 33 of the second pin 10 that is provided with a thread, a hole in a spacer ring 35, and an adjusting screw that is screwed into the threaded hole in the core 33 of the second pin 10. In this exemplary embodiment, the components are positioned on the core 33 of the second pin 10 in the following order, the end ring 36, the cam 6', two rings 34 for mounting the clamping element 3, the spacer ring 35, the safety stud 31, the spacer ring 35, two rings 34 for mounting the clamping element 3, the cam 6', and the end ring 36. In the depiction in fig. 14, the second pin 10 is depicted without one cam 6' and one end ring 36. The core 33 of the second pin 10 extends beyond the end rings 36 and the protruding part thereof is in this exemplary embodiment used to form a shape connection with the hinges 28 of the arm 4, where the protruding parts form a region 30 of the shape connection of the second pin 10 with the hinge 28. Wherein in this exemplary embodiment, the hinges 28 are provided with openings that are complementary in cross-section to the core 33 of the second pin 10 and are mounted thereon, preferably with an overlap, wherein said openings form a region 29 of the shape connection of the hinge 28 to the second pin 10. Alternatively, the second pin 10 is made from a single piece as a machined piece, forged piece, or by 3D printing, in such an alternative embodiment of the second pin 10, it is provided with at least the region 30 of the shape connection of the second pin 10 to the hinge 15, the cam 6', and/or the eccentric 6, wherein the safety stud 31 is subsequently connected thereto by a clamping connection.

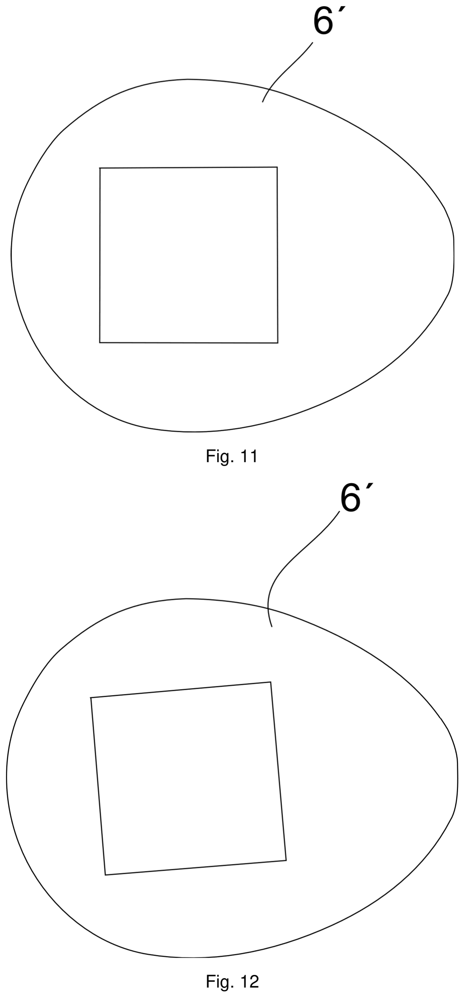

The end rings 36 have an external diameter corresponding to the opening 11 for the second pin 10. In this exemplary embodiment, the cams 6' have an ovoid shape in cross-section, a side view of a cam 6' according to this embodiment is depicted in fig. 11. The rings 34 for mounting the clamping element 3 have a smaller external diameter that corresponds to the size of the diameter of the through opening 12 of the second clamping element 3. The second clamping element 3 is mounted on the rings 34 for mounting the clamping element 3 with a clearance, overlap, or transient mounting. In this exemplary embodiment, the spacer rings 35 have an external diameter identical to the rings 34 for mounting the clamping element 3. At least one spacer ring 35 is provided with an opening for the passage of the adjusting screw. In a side view, the safety stud 31 has an external shape of a circle, from which protrudes a stud part, which is bent at the end. The bend is at such a distance from the pin as the part of the second clamping element 3. The bend abuts against the bottom part of the second clamping element 3 in the closed position of the clamping elements 2,3.

Both the axis of rotation of the rotational mounting of the first clamping element 2 coinciding with the elongated axis of the first pin 7 and the axis of rotation of the rotational mounting of the second clamping element 3 coinciding with the elongated axis of the second pin 10, when the carrying part of the carrier is fitted on the spherical head 15 of the towing device, are in a position lower in the vertical direction than the plane perpendicular to the vertical direction, in which the spherical head 15 has a cross-section with the largest external circumference or lies in that plane. Preferably, the mentioned axes of rotation of the clamping elements 2,3 are lower in this position than the plane perpendicular to the vertical direction in which the spherical head 15 has a cross-section with the largest external circumference. This, in combination with the use of a height of the clamping elements 2,3 that in the vertical direction (depicted in fig. 1) corresponds to the height of the internal space of the base 1 ensures jamming of the clamping elements 2,3 in the base 1 in the closed position with the spherical head 15 fitted on. The exertion of force in this position causes the exertion of torque on the clamping elements 2,3, which in the view of fig. 2 are directed away from the observer, but the rotation does not occur anymore precisely because of the jamming of the clamping elements 2,3 in the base 1.

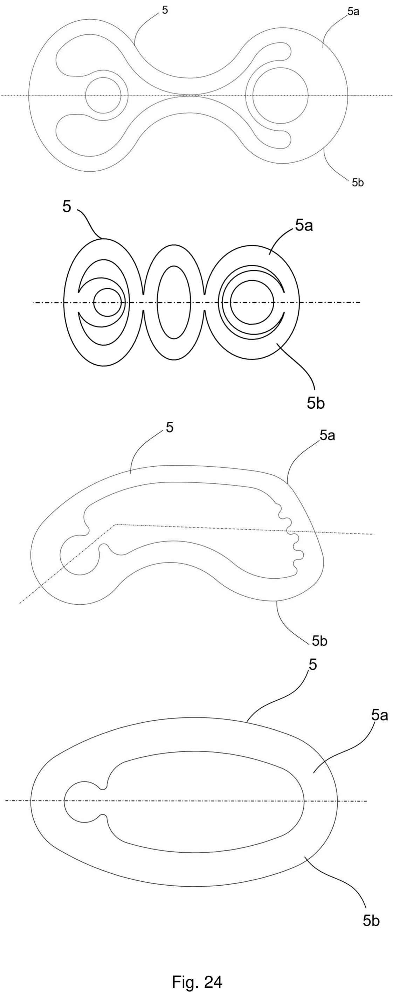

The elastic member 5 according to this exemplary embodiment is depicted in fig. 4. The elastic member 5 comprises an upper part 5a and a lower part 5b, which are formed together as one piece and there is at least one internal opening between them. Both parts 5a,5b are indicated in fig. 24 for all, including the below, exemplary embodiments of the elastic member 5. In this exemplary embodiment, the elastic member 5 comprises one internal opening. In this exemplary embodiment, the elastic member 5 is a flame-cut piece, cutout piece, or machined piece. Wherein it is preferred to machine at least the contact surfaces of the elastic member, such as the region 14 for contact with the eccentric 6 and/or the cam 6'. In some embodiments, the elastic member 5 is also hardened and tempered depending on the manufacturing technology. Preferably, the elastic member 5 is made of metal, more preferably of steel, most preferably of spring steel. It is possible to take advantage of the fact that the elastic member 5 is stacked, that is, if it comprises several pieces of identical shape, in the view in the direction of the axis of the receiving recess 13 for receiving the first pin 7, which are stacked together so as to be flush in this view. The elastic member 5 comprises the receiving recess 13 for receiving the first pin 7. In this exemplary embodiment, the receiving recess 13 has the shape of a circular section, which is followed by the remaining part of the internal opening of the elastic member 5. The first pin 7 is mounted in this receiving recess 13 such that it is prevented from sliding relative to the elastic member 5 in a plane perpendicular to its elongated axis.

On a part of the surface of the internal opening, the elastic member 5 comprises the region 14 for contact with the eccentric 6 and/or the cam 6. In this exemplary embodiment, this region 14 for contact with the eccentric 6' and/or cam 6 is intended for contact with the cam 6'. In this exemplary embodiment, the region for contact with the eccentric 6' and/or cam 6 is smooth and is on the opposite side of the internal opening of the elastic member 5 from the receiving recess 13.

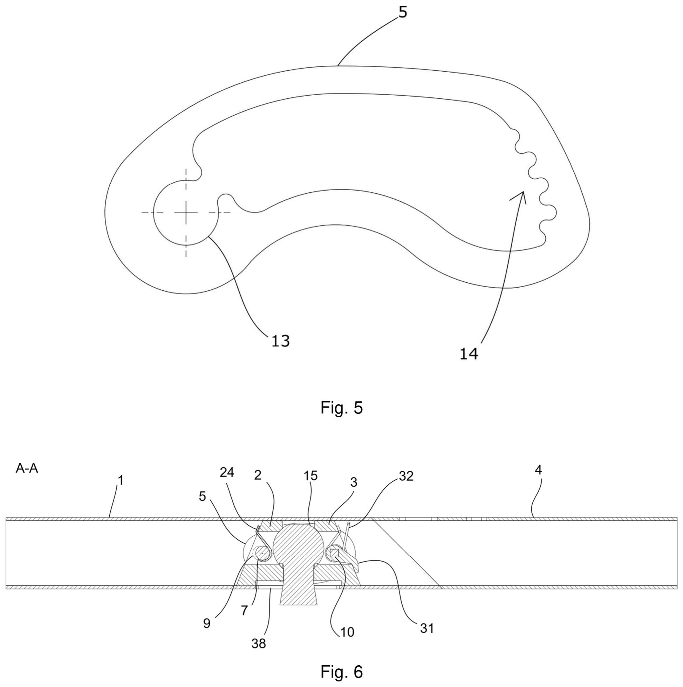

The function of the carrying part of the carrier is clarified by fig. 6 and fig. 17. Depending on the positions of the arm 4 and the clamping jaws 2,3, the carrying part of the carrier is in two basic positions, the open position and the closed position, and the positions in between these positions, the released position and the fitted position.

The open position is depicted in fig. 17. In this position, the carrying part of the carrier is not fitted on the towing device and the arm 4 is rotated relative to the base 1. In this position, the clamping elements 2,3 are unclamped and allow the spherical head 15 to enter the internal space of the base 1. In this exemplary embodiment, the unclamping of the clamping elements is assisted by springs. Wherein the spring 32 of the second pin 10 is a torsion spring mounted on the second pin 10 and exerts a force on the second clamping element 3, wherein it is supported at one end against the part of the second clamping element 3 that is located above the axis of rotation of the second clamping element 3 and is supported at the other end against a part of the base 1, in this exemplary embodiment the upper reinforcement 16, which will be described below. The exertion of force of the spring 32 of the second pin 10 causes a torque to be exerted on the second jaw 3, which in the view of fig. 17 has a direction towards the observer and opens a passage for the spherical head 15. Therefore, in this view, the possible rotation of the second clamping element 3 is counterclockwise due to the exertion of torque.

The spring 24 of the first pin 7 is a torsion spring mounted on the first pin 7 and exerts a force on the first clamping element 2, wherein it is supported at one end against the part of the first clamping element 2 that is located above the axis of rotation of the first clamping element 2 and is supported at the other end against a part of the base 1, in this exemplary embodiment in the indicated opening in the base 1. The exertion of force of the spring 24 of the first pin 7 causes a torque to be exerted on the first jaw 2, which in the view of fig. 17 has a direction away from the observer and opens a passage for the spherical head 15. Therefore, in this view, the possible rotation of the second clamping element 3 is clockwise due to the exertion of torque.

When the spring 24 of the first pin 7 and the spring 32 of the second pin 10 are not used, the clamping jaws 2,3 are unclamped by the passage of the spherical head 15 to and/or from the internal space of the base 1.

In this position, the cam 6' and/or the eccentric 6 is in a position where its external point in the region 14 for contact with the eccentric 6 and/or the cam 6' is the external point that is closest to the axis of rotation about which the eccentric 6 and/or the cam 6' rotates. Thus, the elastic member 5 is not loaded by the action of the eccentric 6 and/or cam 6'. The first pin 7, and thus the first clamping element 2, may move translationally within the range of the groove 9 for the first pin 7, possibly with a limitation of the eccentric 6 and/or cam 6' seating on the elastic member 5. In this exemplary embodiment, the cam 6' is used, however, operation with the eccentric 6 is identical.

The link between the cam 6' and/or the eccentric 6 and the elastic member may be a so-called non-functional link in some positions, i.e. these components may not be in mutual contact. Contact occurs only during the rotation of the cam 6' and/or the eccentric 6, which is associated with the rotation of the arm 4 relative to the base 1. Alternatively, the link may be functional and the contact occurs continuously, in which case, in this exemplary embodiment, the dimensions of the groove 9 for the first pin 7 of the elastic member 5 and the cam 6' and/or eccentric have corresponding dimensions.

Another position is a fitted position where fitting of the spherical head 15 into the internal space of the base 1 occurs, where exertion of force from the spherical head 15 results in rotation of the clamping elements 2,3, wherein the arm 4 is still in such a position relative to the base 1 that a full rotation of the cam 6' and/or eccentric 6 is prevented. In this fitted position, which is not depicted, there is already partial clamping of the spherical head 15 by the clamping elements 2,3.

The subsequent position is the released position, where the rotation of the arm 4 relative to the base 1 in a downward direction and the associated rotation of the cam 6' and/or the eccentric 6 results in contact of the eccentric 6 and/or the cam 6' with the elastic member 5 in the region 14 for contact with the eccentric 6 and/or the cam 6' and simultaneously, displacement of the first clamping element 2, or the first pin 7, to a position as close to the second clamping element 3, or the second pin 10, as possible, and simultaneously, there is no full elastic deformation of the elastic member 5.

The closed position is depicted in fig. 6, where the arm 4 is fully rotated and its elongated axis is parallel to the elongated axis of the base 1, wherein in this exemplary embodiment, the axes are identical. The elastic member 5 is elastically deformed and its exertion of force results in full clamping of the spherical head 15 by the clamping elements 2,3. The cam 6' and/or the eccentric 6 are preferably in such a position where its external point in the region 14 for contact with the eccentric 6 and/or the cam 6' is the furthest point away from the axis of rotation about which the eccentric 6 and/or the cam 6' rotates, or it is rotated past this point. In this position, the safety stud 31 further abuts against the second clamping element 3 below its axis of rotation and additionally secures the second clamping element 3 against rotation.

Using the reverse procedure, the spherical head 15 is released and removed from the base 1.

During the transition between the closed position and the released position, the eccentric 6 and/or cam 6' are still in contact with the elastic member 5 in the region 14 for contact with the eccentric 6 and/or the cam 6'. Therefore, in the closed position, where the clamping elements 2,3 are clamped, the eccentric 6 and/or the cam 6' abut against the elastic member 5 in the region 14 for contact with the eccentric 6 and/or the cam 6', and in the released position, where the clamping elements 2,3 are not fully clamped, the eccentric 6 and/or the cam 6' abut against the elastic member 5 in the region 14 for contact with the eccentric 6 and/or the cam 6', wherein the eccentric 6 and/or the cam 6' are in contact with the elastic member 5 in the region 14 for contact with the eccentric 6 and/or the cam 6' the entire time between the transition from the closed position to the released position and vice versa. Thus, the cam 6' and/or the eccentric 6 roll between these positions on the elastic member 5 in the region 14 for contact with the eccentric 6 and/or the cam 6'.

In this exemplary embodiment, the carrier of the carrying element is further provided with a locking mechanism. Although the actual movement to the locked position by moving the arm 4 to a position parallel to the base 1 and the associated clamping of the spherical head 15 by the clamping elements 2,3 is provided by the elastic member 5, in this exemplary embodiment, the carrying part of the carrier is further provided with a safety locking mechanism.

The safety locking mechanism comprises a latch 19, rotationally mounted on the pin 26 of the latch 19, which is mounted in the bottom reinforcement 17. A dowel 20 extends from the latch 19, which is connected to the latch 19 at one end and is connected to a safety button 18 at the other end and is used to bring the latch 19 into motion. The safety button 18 is positioned on the external side of the arm 4. And the dowel 20 passes through a groove 21 for the safety button 18. The safety button 18 is preferably slidably mounted in the groove 21 for the safety button 18. Further, the safety locking mechanism comprises a lock element 23, which is rotationally mounted in an opening 22 for the lock element 23. The lock element has a tongue that protrudes from the lock element 23 and is pivotable together with it. Further, the lock element 23 comprises a top protruding on the external side of the arm 4, which serves to bring the lock element 23 into motion. A spring 27 of the latch 19 is mounted on the pin 26 of the latch 19, which is implemented as a torsion spring and exerts a force on the latch 19, wherein at one end it is supported against the latch 19 and at the other end against the bottom reinforcement 17.

The tongue of the lock element 23 is in contact with the latch 19 to prevent it from rotating in either direction of rotation. In the closed position, the latch 19 then abuts against the upper reinforcement 16 and prevents rotation of the arm 4 relative to the base 1. To release the arm 4, it is necessary to rotate the lock element 23 and displace the latch 29 via the safety button 18. Subsequently, the arm 4 may be rotated after overcoming gravitational forces and forces exerted by the elastic member 5.

### Second exemplary embodiment

The second exemplary embodiment is identical to the first exemplary embodiment except that the cam 6' has a deflected opening for the passage of the core 33 of the second pin 10. This cam is depicted in fig. 12.

### Third exemplary embodiment

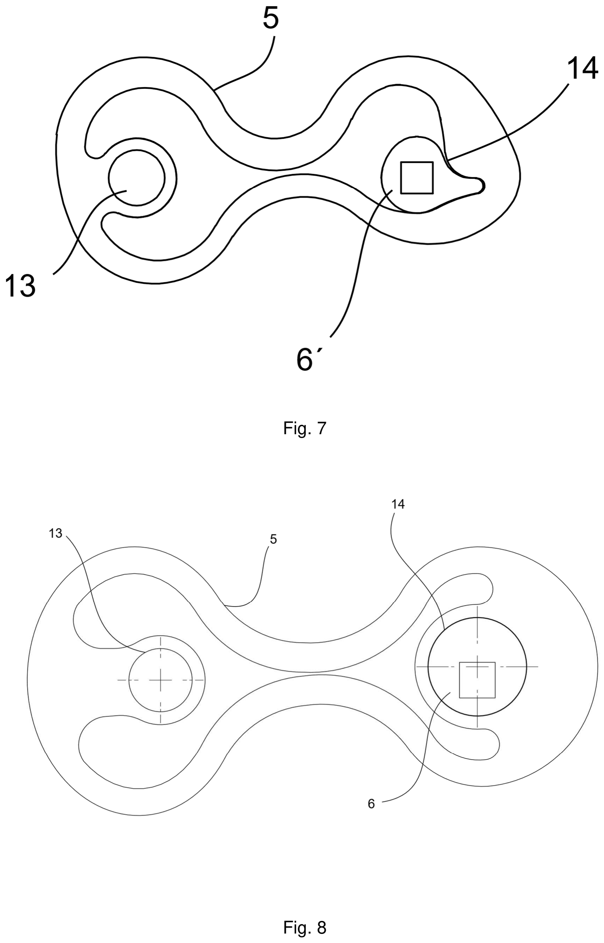

The third exemplary embodiment is identical to the first exemplary embodiment except that the cam 6' has a step change in the distance from the axis of rotation and the elastic member 5 has a complementary shape such that in the released state (depicted in fig. 7), this step change in the distance always fits into the complementary shape of the elastic member 5, thus ensuring the initial position of the cam 6' with greater accuracy. This cam 5 is depicted in fig. 7 together with the elastic member.

### Fourth exemplary embodiment

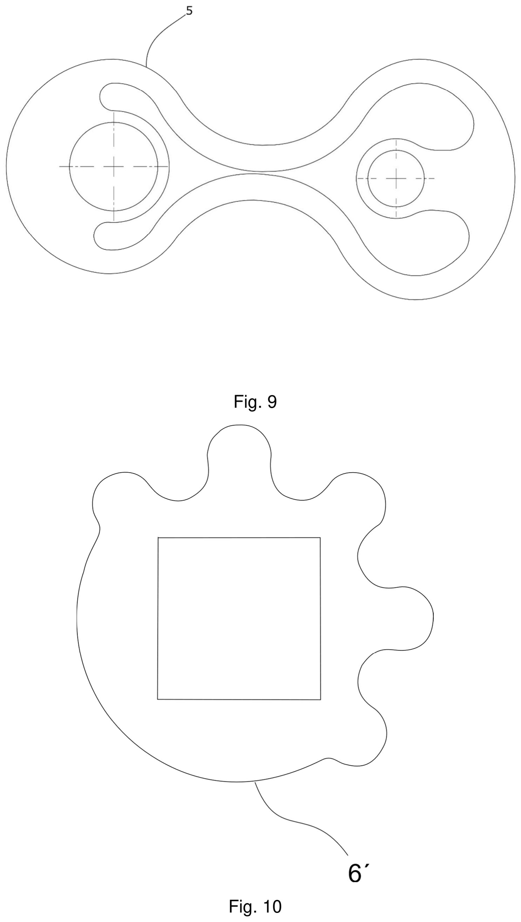

The fourth exemplary embodiment is identical to the first exemplary embodiment except that the elastic member 5 has a different shape and is provided with toothing in the region 14 for contact with the eccentric 6 and/or the cam 6'. And the cam 6' is provided with complementary toothing. The elastic member 5 according to this exemplary embodiment is depicted in fig. 5 and the cam 6' according to this exemplary embodiment is depicted in fig. 10.

### Fifth exemplary embodiment

The fifth exemplary embodiment is identical to the first exemplary embodiment except that the eccentric 6, which is depicted in fig. 3, is used instead of the cam 6'.

### Sixth exemplary embodiment

The sixth exemplary embodiment is identical to the fifth exemplary embodiment except that the elastic member 5 has multiple internal spaces, which is depicted in fig. 9 separately and fig. together with the eccentric 6. The smaller of the internal spaces has the eccentric 6 mounted in it, wherein the entire shell of this opening is the region 14 for contact with the eccentric 6 and/or the cam 6'.

### Seventh exemplary embodiment

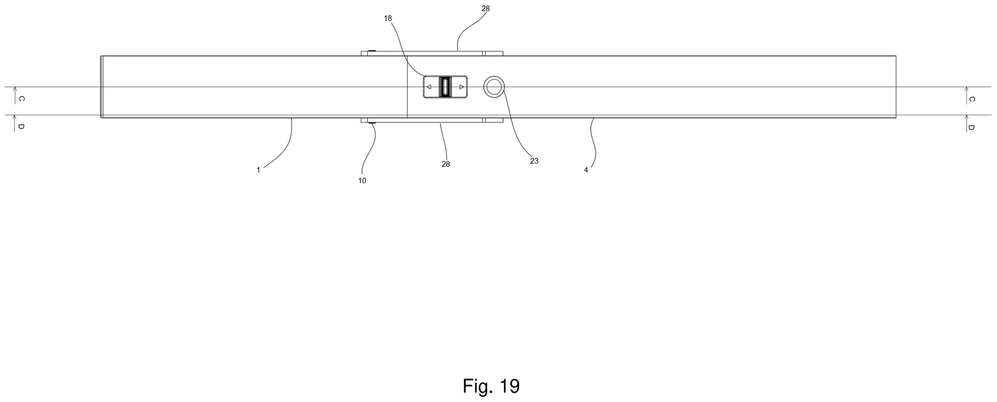

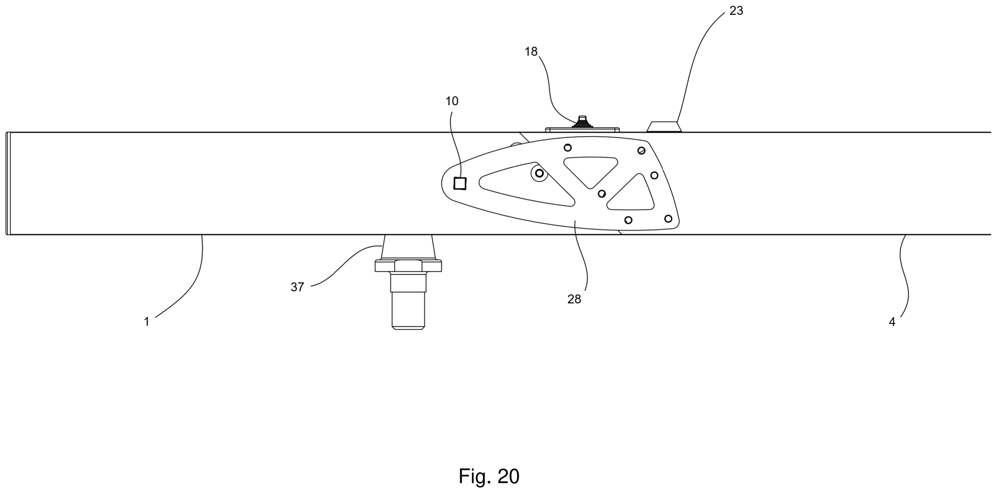

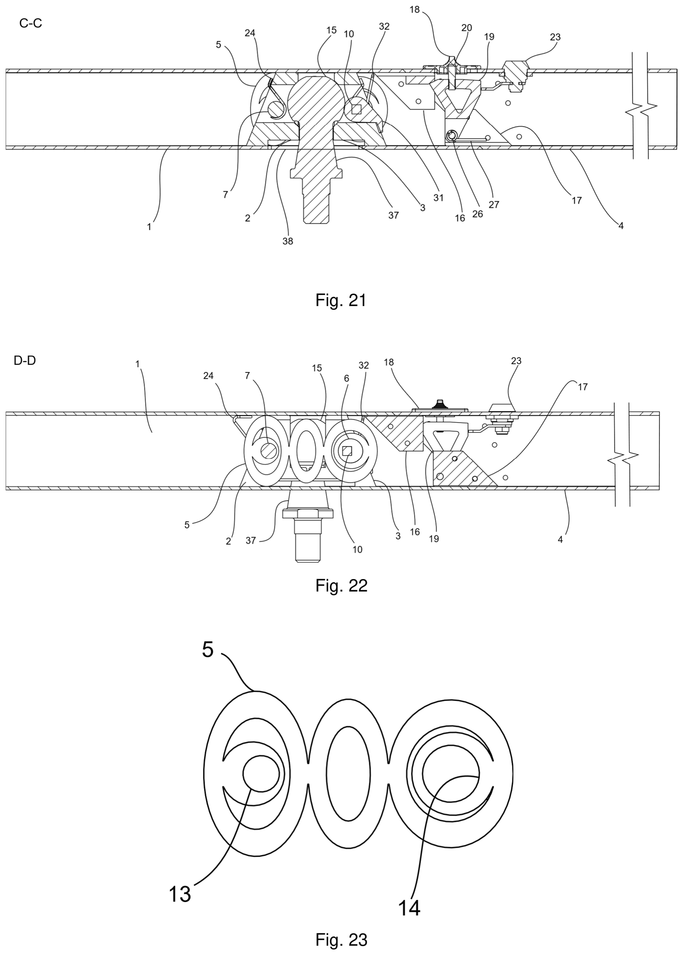

The seventh exemplary embodiment is depicted in figs. 19 to 22 and is identical to the sixth exemplary embodiment, wherein it differs in the mounting of the first pin 7 and in how the elastic member 5 is implemented. In this exemplary embodiment, the base 1 is not provided with grooves 9 for the first pin 7. The first pin 7 is mounted in the receiving recess 13 of the elastic member 5, which is depicted in fig. 23. In this exemplary embodiment, the elastic member 5 is provided with at least three internal spaces, wherein in this particular embodiment, it is provided with five internal spaces, wherein one comprises the region 14 for contact with the eccentric 6 and/or the cam 6', and another one forms the receiving recess 13.

The slidable mounting of the first clamping element 2 is implemented by the first pin 7 and its mounting in the elastic member 5. The elastic member 5 is mounted perpendicular to the first pin 7, wherein the elastic member 5 is in contact with the internal surface of the base 1 at least at two points, wherein these two points lie on a line having exactly one intersection with the axis of the first pin 7. It will be apparent to one skilled in the art that said contact is not necessarily permanent but may be intermittent due to manufacturing tolerances. Said points are preferably in a region that is defined by the projection of the receiving recess 13 or opening 13' for receiving the first pin 7 onto the internal surface of the base 1, wherein said projection is implemented in the vertical direction. In this exemplary embodiment, these axes lie on a line that is vertical. Preferably, it is useful that the elastic members 5 are in contact with the base 1 in the region that is above and below the axis of rotation, or above and below the cross-section of the first pin 7.

Further, in this exemplary embodiment, the spring 24 of the first pin 7 is supported at one end against a part of the first clamping element 2 that is above the axis of rotation of the first clamping element 2 and is supported at the other end against a part of the base 1. The spring 24 of the first pin 7 is slidable together with the first pin 7 and slides along the upper edge of the internal surface of the upper wall of the base 1. Wherein at this end, the spring 24 of the first pin 7 is bent such that it is in contact with the base 1 along a part of the length of its end.

The procedure of fitting on the towing device and the transitions between the closed, released, fitted, and open positions are analogous to the first exemplary embodiment.

### Eighth exemplary embodiment

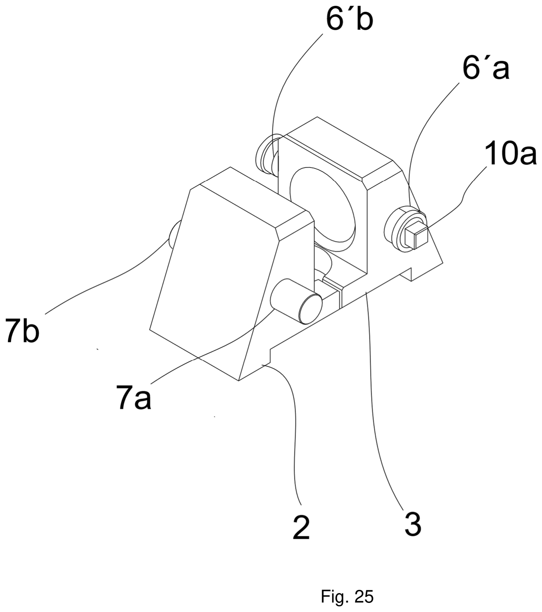

The eighth exemplary embodiment is identical to the seventh exemplary embodiment except that the clamping elements 2,3 are implemented such that each clamping element 2,3 comprises two corresponding co-axial protruding pins 7,10, wherein the base 1 comprises a symmetrically implemented opening 11 for the second pin 10 in the base 1 on two opposite sides for mounting the second pins 10a,10b and the carrying part of the carrier comprises two elastic members 5 that are symmetrically positioned, wherein the first of the first pins 7a is mounted in the first elastic member 5 and the second of the first pins 7b is mounted in the second elastic member 5, wherein the carrying part of the carrier comprises two eccentrics 6 and/or cams 6'a,6'b, each symmetrically mounted on one of the second pins 10a,10b according to the seventh exemplary embodiment. Wherein these pins 7,10 and clamping elements 2,3 are depicted in fig. 25. In this exemplary embodiment, neither the safety locking mechanism nor the spring 24 of the first pin 7 and the spring of the second 32 pin 10 are used.

### Ninth exemplary embodiment

The ninth exemplary embodiment is identical to the first exemplary embodiment except that each clamping element 2,3 comprises two corresponding coaxial protruding pins 7,10, wherein the base 1 comprises a symmetrically implemented opening 11 for the second pin 10 in the base 1 on two opposite sides for mounting the second pins 10a,10b and a symmetrically implemented groove 9 on two opposite sides for mounting the first pins 7a,7b, wherein the carrying part of the carrier comprises two elastic members 5 and two eccentrics 6 and/or cams 6'a,6'b, each symmetrically mounted on one of the second pins 10a,10b according to the first exemplary embodiment. Wherein these pins 7,10 and clamping elements 2,3 are depicted in fig. 25. In this exemplary embodiment, neither the safety locking mechanism nor the spring 24 of the first pin 7 and the spring of the second 32 pin 10 are used.

### Tenth exemplary embodiment

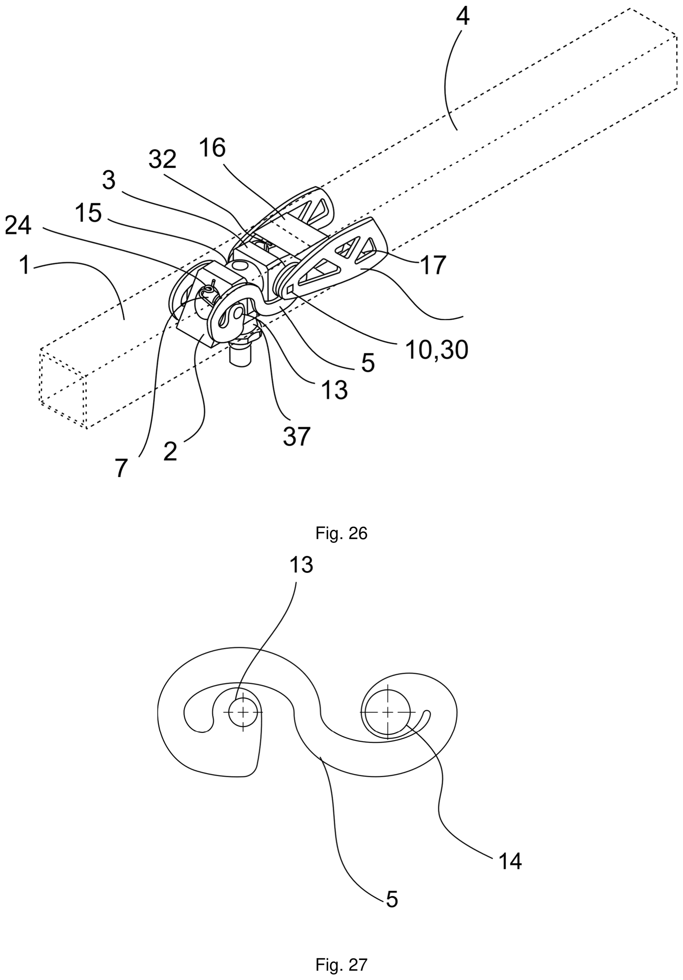

The seventh exemplary embodiment is depicted in fig. 26 and the elastic member 5 according to this exemplary embodiment is depicted in fig. 27, wherein the solution according to this exemplary embodiment is identical to the seventh exemplary embodiment, wherein it differs in the implementation of the elastic member 5. In this exemplary embodiment, the elastic member 5 is open and has a shape close to the letter "S", wherein it comprises two internal openings at the imaginary ends of the letter "S". The first opening is the receiving recess 13 for the first pin 7 and the region 14 for contact with the eccentric 6 and/or cam 6' is in the second opening, wherein in this exemplary embodiment, the eccentric 6 is used.

The elastic member 5 is mounted perpendicular to the first pin 7, wherein the elastic member 5 is in contact with the internal surface of the base 1 at least at two points, wherein these two points lie on a line having exactly one intersection with the axis of the first pin 7. It will be apparent to one skilled in the art that said contact is not necessarily permanent but may be intermittent due to manufacturing tolerances. Said points are preferably in a region that is defined by the projection of the receiving recess 13 or opening 13' for receiving the first pin 7 onto the internal surface of the base 1, wherein said projection is implemented in the vertical direction. In this exemplary embodiment, these axes lie on a line that is vertical. Preferably, it is useful that the elastic members 5 are in contact with the base 1 in the region that is above and below the axis of rotation, or above and below the cross-section of the first pin 7.

### Eleventh exemplary embodiment

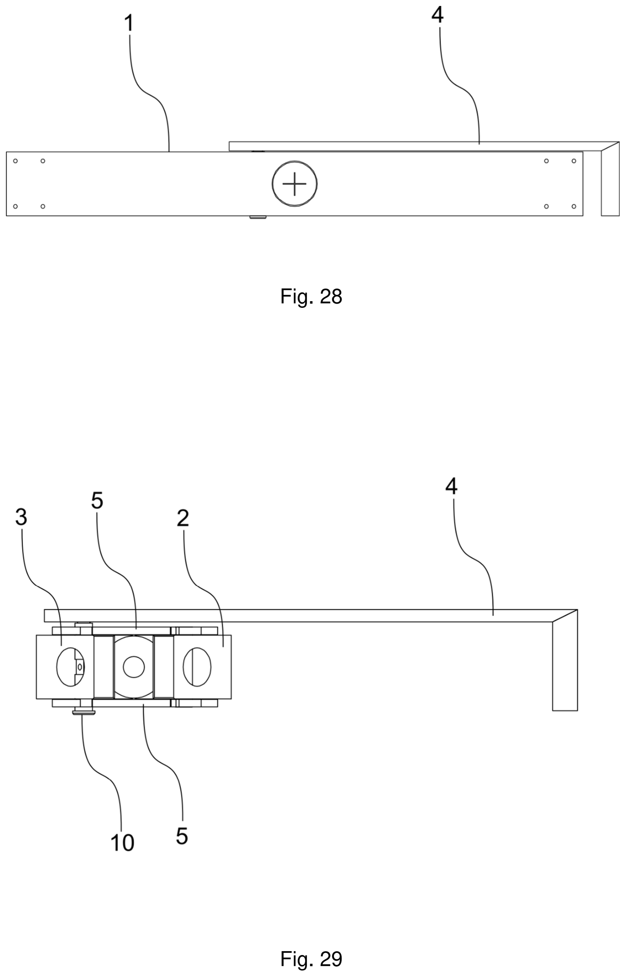

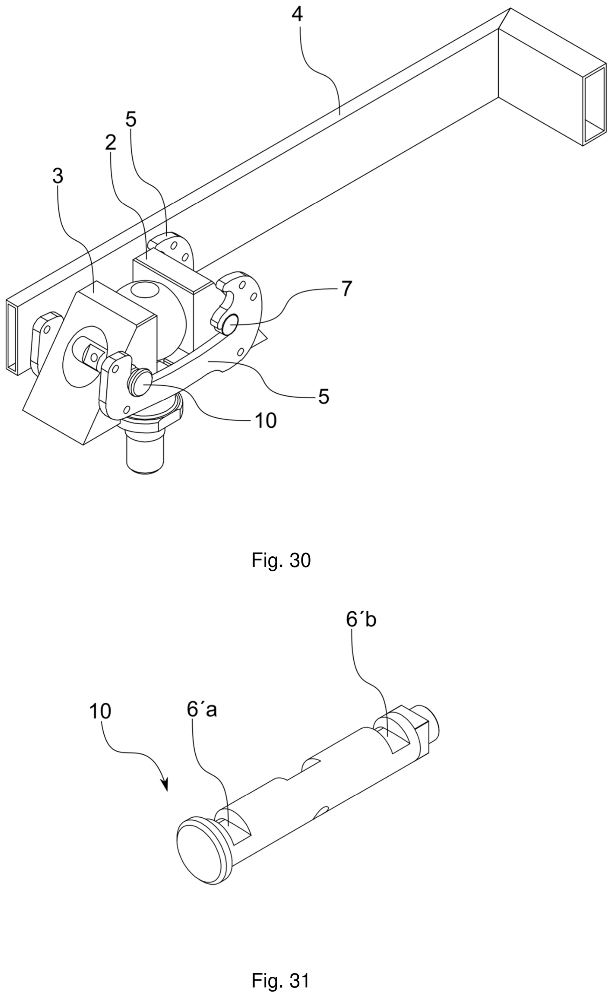

The eleventh exemplary embodiment is shown in figs. 28-33. The eleventh exemplary embodiment is based on the first exemplary embodiment but differs in the implementation of the arm 4, the elastic member 5, the second pin 10, and the eccentric 6. As can be seen in fig. 28, fig. 29, and fig. 30, the arm 4 is attached to the second pin 10 and is positioned from the side of the base 1 - in a top view, the longitudinal axis of the arm 4 and the longitudinal axis of the base 1 are parallel. The control of the arm 4 is similar to the first exemplary embodiment. The elastic member 5, which can be seen in fig. 30, has only the lower part. The part of the elastic member 5 at the second pin 10 has the shape of the letter L, as can be seen in fig. 30.

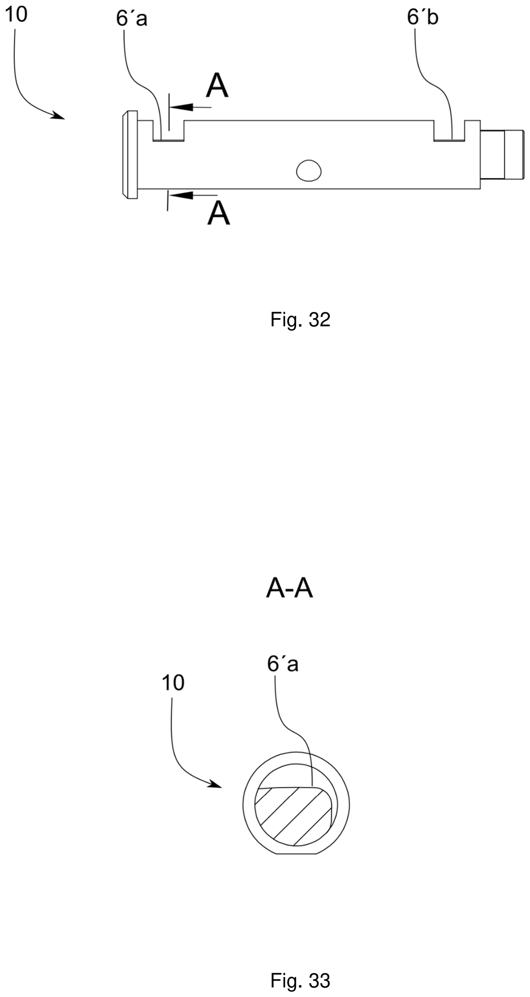

In this exemplary embodiment, the eccentric 6 is directly positioned on the second pin 10 - they are made of one piece of material, where the eccentric 6 are milled cam 6'a for one elastic member 5 and cam 6'b for a second elastic member 5, as can be seen in fig. 31. This surface, which comprises the cam 6' and which can be seen in fig. 33, is the second pin 10 in contact with the elastic member 5. Thus, when the arm 4 is rotated, the second pin 10 is rotated until the position for releasing the clamping elements is reached, where the elastic member 5 comes into contact with the milled surface - cam 6' - and subsequently the first clamping element 2 may be displaced, both clamping elements may rotate and the carrier may be released from the towing device. When the second pin 10 is rotated in the elastic member 5, this structure results mainly in the elastic member 5 rolling on the second pin 10, which improves the transfer of load compared to the mechanism where friction is predominant. Unlike the first exemplary embodiment, the eleventh exemplary embodiment does not comprise the through groove 9 for the first pin 7 in the base 1. Therefore, the first pin 7 is fully positioned inside the base 1.

**List of Reference Signs**

| | | | |
|---|---|---|---|
| 1 - | base | 16 - | upper reinforcement |
| 2 - | first clamping element | 17 - | bottom reinforcement |
| 3 - | second clamping element | 18 - | safety button |
| 4 - | arm | 19 - | latch |
| 5 - | elastic member | 20 - | dowel |
| 5a - | upper part of the elastic member | 21 - | groove for the safety button |
| | | 22 - | opening for the lock element |
| 5b - | lower part of the elastic member | 23 - | lock element |
| 6 - | eccentric | 24 - | spring of the first pin |
| 6' - | cam | 25 - | safety washer |
| 6'a - | first of the cams | 26 - | pin of the latch |
| 6'b - | second of the cams | 27 - | spring of the latch |
| 7 - | first pin | 28 - | hinge |
| 7a - | first of the first pins | 29 - | region of the shape connection of the hinge to the second pin |
| 7b - | second of the first pins | 30 - | region of the shape connection of thesecond pin to the hinge |
| 8 - | through opening of the first clamping element | 31 - | safety stud |
| 9 - | groove for the first pin | 32 - | spring of the second pin |
| 10 - | second pin | 33 - | core of the second pin |
| 10a - | first of the second pins | 34 - | ring for mounting the clamping element |
| 10b - | second of the second pins | 35 - | spacer ring |
| 11 - | opening for the second pin | 36 - | end ring |
| 12 - | through opening of the second clamping element | 37 - | shank of the towing device |
| 13 - | receiving recess | 38 - | opening for the passage of the spherical head |
| 14 - | region for contact with the eccentric and/or the cam | | |
| 15 - | spherical head | | |

## Claims

1. A carrying part of a carrier for attachment to a towing device of a vehicle comprising a base (1) and two clamping elements (2,3) for clamping a spherical head (15) of the towing device, wherein the first clamping element (2) is mounted movably in the base (1) and the second clamping element (3) is mounted rotationally in the base (1), **characterized in that** the first clamping element (2) is in the base (1) mounted at least rotationally and slidably, wherein the carrying part of the carrier further comprises an arm (4) rotationally connected to the base (1), an elastic member (5), an eccentric (6) and/or a cam (6'), and a mechanical connection for linking the movement of the eccentric (6) and/or the cam (6') with the movement of the arm (4), wherein the first clamping element (2) is connected via the elastic member (5) to the eccentric (6) and/or the cam (6') such that the movement of the eccentric (6) and/or the cam (6') exerts a force on the elastic member (5) to move the first clamping element (2) and to create an elastic deformation of the elastic member (5).

2. The carrying part of the carrier according to claim 1, **characterized in that** the movable mounting of the first clamping element (2) is implemented by a first pin (7) that is mounted in the elastic member (5) and the rotational mounting of the second clamping element (3) is implemented by a second pin (10) that is mounted in an opening (11) for the second pin (10) in the base (1).

3. The carrying part of the carrier according to any one of the preceding claims, **characterized in that** the elastic member (5) is slidably mounted in the base (1).

4. The carrying part of the carrier according to claim 1, **characterized in that** the movable mounting of the first clamping element (2) is implemented by the first pin (7) that is mounted in a groove (9) formed in the base (1) and the rotational mounting of the second clamping element (3) is implemented by the second pin (10) that is mounted in the opening (11) for the second pin (10) in the base (1).

5. The carrying part of the carrier according to any one of the preceding claims, **characterized in that** the axis of rotation of the arm (4) is identical to the axis of rotation of the second clamping element (3).

6. The carrying part of the carrier according to any one of claims 2 to 5, **characterized in that** the rotational connection of the arm (4) is implemented by connecting the arm (4) to the second pin (10).

7. The carrying part of the carrier according to any one of the preceding claims, **characterized in that** both the axis of rotation of the rotational mounting of the first clamping element (2) and the axis of rotation of the rotational mounting of the second clamping element (3), when the carrying part of the carrier is fitted on the spherical head (15) of the towing device, are in a position lower in the vertical direction than the plane perpendicular to the vertical direction, in which the spherical head (15) has a cross-section with the largest external circumference or lies **in that** plane.

8. The carrying part of the carrier according to any one of claims 2 to 7, **characterized in that** the eccentric (6) and/or the cam (6') are mounted on the second pin (10).

9. The carrying part of the carrier according to any one of claims 3 to 8, **characterized in that** each clamping element (2,3) comprises a through opening (8,12) through which a corresponding pin (7,10) passes, wherein the base (1) comprises a symmetrically implemented opening (11) for the second pin (10) in the base (1) on two opposite sides for mounting the second pin (10) and a symmetrically implemented groove (9) on two opposite sides for mounting the first pin (7), wherein the carrying part of the carrier comprises two elastic members (5) and two eccentrics (6) and/or cams (6') symmetrically mounted according to the preceding claims.

10. The carrying part of the carrier according to any one of claims 3 to 8, **characterized in that** each clamping element (2,3) comprises two corresponding co-axial protruding pins (7,10), wherein the base (1) comprises the symmetrically implemented opening (11) for the second pin (10) in the base (1) on two opposite sides for mounting the second pins (10a,10b) and the symmetrically implemented groove (9) on two opposite sides for mounting the first pins (7a,7b), wherein the carrying part of the carrier comprises two elastic members (5) and two eccentrics (6) and/or cams (6'a,6'b), each symmetrically mounted on one of the second pins (10a,10b) according to the preceding claims.

11. The carrying part of the carrier according to any one of claims 2 to 3 and 5 to 8, **characterized in that** each clamping element (2,3) comprises the through opening (8,12) through which the corresponding pin (7,10) passes, wherein the base (1) comprises the symmetrically implemented opening (11) for the second pin (10) in the base (1) on two opposite sides for mounting the second pin (10) and the carrying part of the carrier comprises two elastic members (5) that are symmetrically positioned, wherein the first pin (7) is mounted in the first and second elastic member (5), wherein the carrying part of the carrier comprises two eccentrics (6) and/or cams (6') symmetrically mounted according to the preceding claims.

12. The carrying part of the carrier according to any one of claims 2 to 3 and 5 to 8, **characterized in that** each clamping element (2,3) comprises two corresponding co-axial protruding pins (7,10), wherein the base (1) comprises the symmetrically implemented opening (11) for the second pin (10) in the base (1) on two opposite sides for mounting the second pins (10a,10b) and the carrying part of the carrier comprises two elastic members (5) that are symmetrically positioned, wherein the first of the first pins (7a) is mounted in the first elastic member (5) and the second of the first pins (7b) is mounted in the second elastic member (5), wherein the carrying part of the carrier comprises two eccentrics (6) and/or cams (6'a,6'b), each symmetrically mounted on one of the second pins (10a,10b) according to the preceding claims.

13. The carrying part of the carrier according to any one of claims 8 to 13, **characterized in that** in the closed position, when the clamping elements (2,3) are clamped, the eccentric (6) and/or cam (6') abut against the elastic member (5) in the region (14) for contact with the eccentric (6) and/or cam (6'), and in the released position, when the clamping elements (2,3) are not fully clamped, the eccentric (6) and/or cam (6') abut against the elastic member (5) in the region (14) for contact with the eccentric (6) and/or cam (6'), wherein the eccentric (6) and/or cam (6') are in contact with the elastic member (5) in the region (14) for contact with the eccentric (6) and/or cam (6') the entire time between the transition from the closed position to the released position and vice versa.
